# EUROPEAN PATENT APPLICATION

(11) **EP 4 591 712 A1**
(43) Date of publication of application: **30.07.2025**
(21) Application number: 24153318.1
(22) Date of filing: 23.01.2024
(51) Int. Cl.: A01N 43/10, A01N 47/38, A01P 13/00

(54) **METHOD OF TREATING RICE**

(71) Applicant: Adama Agan Ltd., 7710201 Ashdod (IL)
(72) Inventor: ESCRIBANO-VANACLOCHA, Juan A., E-28002 Madrid (ES); BERNASCONI, Luca, 24050 Grassobbio, Bergamo (IT); PAGANI, Giovanni, 24050 Grassobbio, Bergamo (IT); SPERLING, Shani, 8532500 Beit Kama (IL)
(74) Representative: ABG Intellectual Property Law, S.L.

(57) **Abstract**

The present invention is directed to a method for controlling weeds in the presence of a rice crop that has been wet-seeded comprising contacting the weeds or their *locus* with an agriculturally effective amount of a chloroacetamide, salts or stereoisomers thereof. The invention also covers tank mixtures and formulations for use in weeding wet-seeded rice crops.

## Description

### FIELD OF INVENTION

The present invention relates to a method of controlling weeds in the presence of a rice crop that has been wet-seeded.

### BACKGROUND OF INVENTION

The vulnerability of crops to weeds makes crop protection management one of the major components of the total crop production system. Various insects and fungi along with the undesired weeds are very harmful to crop plants and can significantly reduce crop yields and qualities. Herbicides alone or in combination help minimize this damage by controlling threats to the crop. Combinations of herbicides or mixtures of one or more herbicides with other active ingredients are typically used to broaden spectrum of control, to minimize the doses of chemicals used, to retard the development of resistance and to reduce the cost of the treatment through additive effect. It is however a challenging task to find new applications for known herbicides.

It is an object of the present invention to provide a method for controlling weeds in the presence of rice crop. For example, it is an object of the present invention to provide treatments that improve the known standards, for example by obtaining increased efficiency while avoiding additional phytotoxicity.

### SUMMARY OF THE INVENTION

It is an endeavor of the present invention to improve the existing weed control for rice crops. Considering the above, it is a first aspect of the present invention to provide a method for controlling weeds in the presence of a rice crop comprising wet-seeding rice seeds and contacting the weeds or their *locus* with an agriculturally effective amount of a chloroacetamide, preferably dimethenamid-P, salts or stereoisomers thereof. Thus, the rice crop is wet-seeded in the locus of a weed, that is, in an area where the weeds grow or may grow. As discussed below, the locus is typically a paddy rice field, and the chloroacetamide is usually applied before germination of the rice seeds, preferably before sowing the rice seeds.

Further aspects of the present invention are listed below:
- A formulation comprising a chloroacetamide for use in the control of weeds in the presence of a rice crop that has been wet-seeded.
- A tank mixture comprising a chloroacetamide for use in the control of weeds in the presence of a rice crop that has been wet-seeded.
- The use of a chloroacetamide for controlling weeds in the presence of a rice crop that has been wet-seeded.

### DETAILED DESCRIPTION OF THE PRESENT INVENTION

### Definitions

Prior to setting forth the present subject matter in detail, it may be helpful to provide definitions of certain terms used herein. Unless defined otherwise, all technical and scientific terms used herein have the same meaning as is commonly understood by one of skill in the art to which this subject matter pertains.

As used herein, the term "active ingredient" includes, but is not limited to, herbicides, insecticides, and fungicides.

As used herein, the term "herbicide" refers to an active ingredient capable of controlling unwanted plants or weeds, for example when growing in the locus of the desired crop.

As used herein, the terms "control" or "controlling" are meant to include, but are not limited to, any killing, growth regulating, inhibiting or interfering with the normal life cycle of a weeds.

As used herein, the term "effective" when used to describe a method for controlling, means that the method provides a good level of control of the undesired weeds without significantly interfering with the normal growth and development of the crop.

As used herein, the term "effective amount" when used in connection with an active ingredient or a combination of active ingredients refers to an amount thereof that, when ingested, contacted with or sensed, is sufficient to achieve a good level of control or activity without significantly harming the crop.

As used herein, the term "effective amount" when used in connection with a non-active component, i.e. additive, such as a surfactant or an organic carrier, refers to an amount of the additive that is sufficient to perform its function within the formulation.

As used herein, the term "agriculturally acceptable carrier" means a carrier which is known and accepted in the art for the formation of compositions for agricultural or horticultural use, and are accepted by at least one regulatory authority such as the EPA (Environmental Protection Agency).

As used herein, the term "agriculturally acceptable additives" is defined as any substance that itself is not an active ingredient but is added to the formulation to improve its properties, such as stability, flowability, density, etc., and are accepted by at least one regulatory authority such as the EPA (Environmental Protection Agency). Examples of such additives are pH modifiers (e.g. acids or bases), thickening agent, sticking agents, surfactants, anti-oxidation agent, anti-foaming agents and thickeners.

As used herein, the term "adjuvant" is broadly defined as any substance that itself is not an active ingredient, but which enhances or is intended to enhance the effectiveness of the pesticide with which it is used. Adjuvants may be understood to include, but are not limited to, spreading agents, penetrants, compatibility agents, and drift retardants. They are typically used to dilute ready mix formulations prior to application in the field, although some formulations include built-in adjuvants.

As used herein, the term "ready mix" means a concentrated (e.g. more than 1 wt.% of active ingredients) formulation that may be applied to plants directly after dilution. The formulation comprises one or more active ingredients. The term "mixture" refers, but is not limited to, a combination in any physical form, e.g., blend, solution, alloy, or the like.

As used herein, the term "tank mix" or "tank mixture" refers to the mixture of two or more active ingredients or formulations that are mixed shortly before application. Tank mixtures can therefore be formed by mixing one or more formulations (each comprising one or more active ingredients) with water. Alternatively, as mentioned above, tank mixtures may comprise the mixture of one or more formulations (each comprising one or more active ingredients) with one or more adjuvants.

As used herein the term "plant" or "crop" includes reference to whole plants, plant organs (e.g. leaves, stems, twigs, roots, trunks, limbs, shoots, fruits etc.), plant cells, or plant seeds. This term also encompasses plant crops such as fruits. The term "plant" may also include the propagation material thereof, which may include all the generative parts of the plant such as seeds and vegetative plant material such as cuttings and tubers, which can be used for the multiplication of the plant. It may also include spores, corms, bulbs, rhizomes, sprouts basal shoots, stolons, and buds and other parts of plants, including seedlings and young plants, which are to be transplanted after germination or after emergence from soil.

As used herein, the term "locus" includes a habitat, breeding ground, plant, propagation material, soil, area, material or environment in which a pest or crop is growing or may grow.

As used herein, the term "genetically modified plants" includes plants which have been modified by breeding, mutagenesis or genetic engineering, including CRISPR. Genetically modified plants are plants, which genetic material has been modified by the use of recombinant DNA techniques. Typically, one or more genes have been integrated into the genetic material of such a plant in order to improve certain properties of the plant.

The term "a" or "an" as used herein includes the singular and the plural, unless specifically stated otherwise. Therefore, the terms "a," "an" or "at least one" can be used interchangeably in this application.

Throughout the application, descriptions of various embodiments use the term "comprising"; however, it will be understood by one of skill in the art, that in some specific instances, an embodiment can alternatively be described using the language "consisting essentially of" or "consisting of".

As used herein the term "ha" refers to hectare.

As used herein, the term "g" refers to gram, and "L" or "I" refers to liter.

As used herein, the term "surfactant" means an agriculturally acceptable material which imparts emulsifiability, stability, spreading, wetting, dispersibility or other surface-modifying properties. Examples of suitable surfactants include non-ionic, anionic, cationic and ampholytic/Zwitterionic surfactants.

For purposes of better understanding the present teachings and in no way limiting the scope of the teachings, unless indicated to the contrary, the numerical parameters set forth in the following specification and attached claims are approximations that may vary depending upon the desired properties sought to be obtained. At the very least, each numerical parameter should at least be construed in light of the number of reported significant digits and by applying ordinary rounding techniques. In this regard, use of the term "about" herein specifically includes ±10% from the indicated values in the range. In addition, the endpoints of all ranges directed to the same component or property herein are inclusive of the endpoints, are independently combinable, and include all intermediate points and ranges.

Unless otherwise specified, references to percentages of a component present in a combination are by weight (wt.) percentages of the component with respect to the total weight of the combination.

It is further understood that where a parameter range is provided, all integers within that range, and tenths thereof, are also provided by the subject matter. For example, "0.1% to 50%" includes 0.1 %, 0.2 %, 0.3 %, 0.4 % etc. up to 50 %.

As used herein, the phrase "block copolymer" means a polymer comprising at least two different polymers combined by a covalent bond. Each of the blocks is usually a homopolymer but can also be a copolymer with a specific distinct physical/chemical or functional characteristic (e.g., having one block that is easily soluble in water, with the other block being primarily insoluble in water).

When a ratio "X:Y" is said to be "n or higher", it is meant that the ratio is that the division between "X" and "Y" (i.e. X/Y) has a result of n or higher. When a ratio "X:Y" is said to be "n or less", it is meant that the ratio is that the division between "X" and "Y" (i.e. X/Y) has a result of n or less.

The method of the invention may comprise a second active ingredient. Said second active ingredient can be a second herbicide wherein the mechanism is one selected from the group consisting Inhibition of ACCase (HRAC group 1), Inhibition of ALS (HRAC group 2), Inhibition of microtubule assembly (HRAC group 3), Auxin mimics (HRAC group 4), Inhibition of photosynthesis PS II-Serine 264 (HRAC group 5), Inhibition of photosynthesis PS II-Histidine 215 (HRAC group 6), Inhibition of EPSP synthase (HRAC group 9), Inhibition of glutamine synthetase (HRAC group 10), Inhibition of PDS (HRAC group 12), Inhibition of DOXP synthase (HRAC group 13), Inhibition of PPO (HRAC group 14), Inhibition of VLCFAs (HRAC group 15), DHP inhibition (HRAC group 18), Auxin transport inhibitors (HRAC group 19), PS I electron diversion (HRAC group 22), Inhibition of microtubule organization (HRAC group 23), Uncouplers (HRAC group 24), Inhibition of HPPD (HRAC group 27), Inhibition of dihydroorotate dehydrogenase (HRAC group 28), Inhibition of cellulose synthesis (HRAC group 29), Inhibition of fatty acid thioesterase (HRAC group 30), Inhibition of serine threonine protein phosphatase (HRAC group 31), Inhibition of solanesyl diphosphate synthase (HRAC group 32), Inhibition of homogentisate solanesyl transferase (HRAC group 33), and Inhibition of lycopene cyclase (HRAC group 34), Unknown mode of action.

Preferably, said second herbicide is an ALS inhibitor, for example, a sulfonylurea, a triazolopyrimidine type 1, a triazolopyrimidine type 2, a triazolinone, a sulfonanilide or a pyrmidinyl benzoate. For example, the sulfonylurea can be one selected from the group consisting of amidosulfuron, azimsulfuron, bensulfuron-methyl, chlorimuron, chlorsulfuron, cinosulfuron, cyclosulfamuron, ethametsulfuron, ethoxysulfuron, flazasulfuron, flucetosulfuron, flupyrsulfuron, foramsulfuron, halosulfuron, imazosulfuron, iodosulfuron, mesosulfuron, metsulfuron-methyl, nicosulfuron, orthosulfamuron, oxasulfuron, primisulfuron, propyrisulfuron, prosulfuron, pyrazosulfuron, rimsulfuron, sulfometuron, sulfosulfuron, thifensulfuron, triasulfuron, tribenuron, trifloxysulfuron, triflusulfuron, and tritosulfuron; or the Imidazolinone can be one selected from the group consisting of imazapic, imazamethabenz, imazamox, imazapyr, imazaquin, imazethapyr; or the Triazolopyrimidine type 1 can be one selected from the group consisting of cloransulam, diclosulam, florasulam, flumetsulam, metosulam; or the Triazolopyrimidine type 2 can be one selected from the group consisting of Penoxsulam, pyroxulam; or the Pyrimidinyl(thio)benzoate can be one selected from the group consisting of bispyribac, pyribenzoxim, pyriftalid, pyrithiobac, pyriminobac; or the Triazolinone can be one selected from the group consisting of flucarbazone, propoxycarbazone, thiencarbazone; or the Sulfoanilide can be one selected from the group consisting of pyrimisulfan, triafamone; or salts, esters or stereo isomers thereof, or mixtures thereof.

For example, the second active ingredient can be a triazolinone such as flucarbazone, propoxycarbazone, or thiencarbazone, preferably thiencarbazone, salts, esters or stereoisomers thereof.

For example, the amount of said second active ingredient can be 0.1 wt.% or more with respect to the total weight of the formulation, or 0.5 wt.% or more, or 1 wt.% or more with respect to the total weight of the formulation. For example, the amount of said second active ingredient can be between 0.1 wt.% and 99 wt.%, with respect to the total weight of the formulation, for example, between 0.2 wt.% and 80 wt.%, or between 0.5 wt.% and 70 wt.%, or between 0.8 wt.% and 60 wt.%, or between 0.8 wt.% and 50 wt.%, or between 0.8 wt.% and 40 wt.%, or between 0.8 wt.% and 35 wt.%, or between 1.2 wt.% and 30 wt.%, or between 1.2 wt.% and 25 wt.%, or between 1.2 wt.% and 20 wt.%, with respect to the total weight of the formulation.

For example, the amount of the chloroacetamide, preferably dimethenamid-P, can be 0.1 wt.% or more with respect to the total weight of the formulation, or 0.5 wt.% or more, or 1 wt.% or more, or 5 wt.% or more, or 10 wt.% or more, or 15 wt.% or more, or 20 wt.% or more with respect to the total weight of the formulation. For example, the amount of the chloroacetamide, preferably dimethenamid-P, can be between 0.1 wt.% and 99 wt.%, with respect to the total weight of the formulation, for example, between 1 wt.% and 95 wt.%, or between 5 wt.% and 90 wt.%, or between 10 wt.% and 80 wt.%, or between 10 wt.% and 60 wt.%, or between 10 wt.% and 55 wt.%, or between 10 wt.% and 50 wt.%, or between 10 wt.% and 40 wt.%, or between 15 wt.% and 35 wt.%, or between 20 wt.% and 30 wt.%, with respect to the total weight of the formulation.

It is preferred that the weight proportion chloroacetamide:second active ingredient is above 0.1, for example above 1, for example above 5. For example, the weight proportion dimethenamid:second active ingredient is between 1 and 80, for example, between 2 and 50 or between 5 and 30 or between 5 and 25 or between 10 and 20.

For example, the method comprises the application of a chloroacetamide (preferably, dimethenamid-P) and thiencarbazone-methyl, wherein the amount of chloroacetamide (preferably, dimethenamid-P) can be between 0.1 wt.% and 99 wt.%, or between 5 wt.% and 90 wt.%, or between 10 wt.% and 40 wt.%, or between 15 wt.% and 35 wt.%, or between 20 wt.% and 30 wt.%, with respect to the total weight of the formulation; and the amount of thiencarbazone-methyl is between 0.2 wt.% and 80 wt.%, or between 0.8 wt.% and 40 wt.%, or between 1.2 wt.% and 20 wt.%, with respect to the total weight of the formulation. For example, the method comprises the application of dimethenamid-P and thiencarbazone-methyl, wherein the amount of dimethenamid-P can be between 10 wt.% and 40 wt.%, with respect to the total weight of the formulation; and the amount of thiencarbazone-methyl is between 0.8 wt.% and 20 wt.%, with respect to the total weight of the formulation.

The method may also use safeners. Commonly available safeners which may be usefully employed, individually or in any combination found to be useful, with the present formulation may include but are in no way limited to Daimuron (Dymron), Cumyluron , Dimepiperate, Fenclorim, Cloquintocet, (Cloquintocet-mexyl), Fenchlorazole-ethyl, Mefenpyr (Mefenpyrdiethyl), Isoxadifen (Isoxadifenethyl), Cyprosulfamide, Dietholate, Benoxacor, BPCMS, Cyometrinil, Dichlormid, Dicyclonon, Dietholate, fenchlorazole, Flurazole, Fluxofenim, Furilazole, Jiecaowan, Jiecaoxi, Mephenate, Metcamifen, Naphthalic anhydride, or Oxabetrinil. Those skilled in the relevant field of art will immediately be aware of further safeners that may be employed without departing from the scope of the mixture of the invention disclosed herein. Combinations of safeners can be employed in the methods and mixtures disclosed herein. As used herein, the term "safener" is understood as a compound that reduces the herbicidal effect on a desirable plant when compared to the expected herbicidal effect without the safener. Thus, the formulation improves selectivity between the desirable crop and the weeds being targeted by the formulation. A safening effect may be identified when the measured herbicidal effect of the formulation on the desirable crop is less than the expected herbicidal effect.

The method preferably can use a combination of thiencarbazone, a salt, a stereoisomer or an ester thereof, and cyprosulfamide. It is preferred that the weight proportion cyprosulfamide:second active ingredient is above 0.1, for example above 0.5. For example, the weight proportion cyprosulfamide:second active ingredient is between 0.1 and 5, for example, between 0.5 and 4 or between 0.8 and 3 or between 1 and 2. Cyprosulfamide, if used, will be enough to safen the rice from thiencarbazone-methyl. For example, the amount of cyprosulfamide can be 0.1 wt.% or more with respect to the total weight of the formulation, or 0.5 wt.% or more, or 1 wt.% or more with respect to the total weight of the formulation. For example, the amount of cyprosulfamide can be between 0.1 wt.% and 99 wt.%, with respect to the total weight of the formulation, for example, between 0.2 wt.% and 80 wt.%, or between 0.5 wt.% and 70 wt.%, or between 0.8 wt.% and 60 wt.%, or between 1 wt.% and 50 wt.%, or between 1.2 wt.% and 40 wt.%, or between 1.2 wt.% and 35 wt.%, or between 1.5 wt.% and 30 wt.%, or between 1.5 wt.% and 25 wt.%, or between 1.5 wt.% and 20 wt.%, with respect to the total weight of the formulation.

### METHOD OF USE

The present invention provides a method for controlling weeds in the presence of a rice crop comprising wet-seeding rice seeds and contacting the weeds or their locus with an agriculturally effective amount of a chloroacetamide (preferably, dimethenamid), salts or stereoisomers thereof.

As shown in the examples of the application, the inventors have discovered that the treatment of rice with a chloroacetamide, salts or stereoisomers thereof seeded under dry conditions results in high levels of phytotoxicity to the point it is not suitable for agricultural purposes. However, the same amounts of chloroacetamide, salts or stereoisomers thereof applied to a locus wherein the rice crop is or will be wet-seeded is surprisingly selective (no phytotoxicity is observed) and more efficacious than the standard treatment (e.g. flufenacet). Dry seeding is the sowing of the rice seeds on a soil that has essentially no water above the ground level, while wet-seeding is the opposite, the sowing of rice seeds on a soil that is at least partially covered with a layer of water. For the purposes of the present document wet-seeding also includes conditions under which the rice plants are nursed to a size and are then transferred (re-planted) to a soil that is at least partially covered with a layer of water, and said soil to which the rice plant is transplanted is or will be treated with a chloroacetamide. The depth, that is, the distance between the soil and the water surface, of the water layer under which the rice seeds are sown (or the plant replanted) is for example from 0.1 cm to 200 cm, for example from 0.5 cm to 80 cm, or from 1 cm to 50 cm, or from 2 to 40 cm, or from 5 to 40 cm. The locus is typically a flooded (for example, a field with a water layer of at least 0.1 cm deep) rice field or a flooded rice paddy (or "paddy fields").

Throughout the cultivation of the rice crop, the field (locus) can be flooded any number of times, typically one, two, three or four times before harvesting. Flooding can involve any amount of water depth above the surface of the soil, for example 1 cm to 200 cm above water. Typically, the field is flooded to a depth (i.e. distance between the soil and the water surface) of between 1 cm and 50 cm, for example between 5 cm and 40 cm. Flooding can be deeper in the case of deepwater rice cultivation. Each flooding period can last from 1 hour to 50 days, typically from 1 day to 50 days, for example, from 10 days to 40 days. The period between floodings is not critical and typically lasts from 1 hour to 7 days. Also, there are several periods in which the rice seeds can be wet-seeded, for example, during a first flooding or during a second flooding.

In an embodiment, the chloroacetamide (preferably, dimethenamid), salts or stereoisomers thereof may be applied early pre-emergence, pre-emergence, or post-emergence with respect to the crop germination. The method can comprise the addition of a second active ingredient and/or a safener, that can be added sequentially or simultaneously with the chloroacetamide, salts or stereoisomers thereof. If added simultaneously it is preferred that they are added as a formulation or tank mixture thereof. Said formulation may be applied via any method available, for example, furrow spray, foliar application, broadcast, basal application, soil application, soil incorporation or soil injection. The chloroacetamide (preferably, dimethenamid), salts or stereoisomers thereof can also be used at different times during the cultivation process. For example, before a first flooding (or before the only flooding), during the first flooding (or during the only flooding), or before or during the second flooding. It can be applied before sowing or after sowing, preferably before the germination of the rice crop, preferably pre-sowing. The election of the timing for adding the chloroacetamide, salts or stereoisomers thereof can depend on the type of soil, variety of rice or other conditions, such as weather conditions.

For example, a typical method according to the invention involves applying and effective amount of the chloroacetamide (preferably, dimethenamid), salts or stereoisomers thereof to the rice field (locus), flooding the rice field (locus) to a depth of 1 cm to 50 cm for 1 to 40 days, removing the water for a period of 1 hour to 5 days, then re-flooding the rice field (locus) to a depth of 1 cm to 50 cm for 1 to 40 days and sowing the rice seeds or replanting rice plants into the flooded rice field. Alternatively, the wet method may involve flooding the rice field (locus) to a depth of 1 cm to 50 cm for 1 to 40 days while applying an effective amount of the a chloroacetamide (preferably, dimethenamid), removing the water for a period of 1 hour to 5 days, , then re-flooding the rice field (locus) to a depth of 1 cm to 50 cm for 1 to 40 days, and sowing the rice seeds or replanting rice plants into the flooded rice field. In yet another alternative the method according to the invention involves flooding the rice field (locus) to a depth of 1 cm to 50 cm for 1 to 40 days, applying and effective amount of the chloroacetamide (preferably, dimethenamid), salts or stereoisomers thereof to the rice field (locus), removing the water for a period of 1 hour to 5 days, then re-flooding the rice field (locus) to a depth of 1 cm to 50 cm for 1 to 40 days and sowing the rice seeds or replanting rice plants into the flooded rice field.

The mixture of the invention can be added to rice crops, for example, a wild-type rice (also referred to as "conventional rice crop") varieties or genetically modified plants. Wild-type rice or "conventional rice crop" is one that is neither herbicide resistant nor herbicide tolerant.

The plants include genetically modified plants which tolerate the action of herbicides, fungicides or insecticides as a result of breeding and/or genetically engineered methods. The rice crop can be for example resistant to ACCase inhibitors, to ALS inhibitors, to HPPD inhibitors, to PPO inhibitors or to more than one of such inhibitors. For example, the rice crop can be a rice crop resistant or tolerant to imidazolines , to aryloxphenoxy-propionates or to both. An example of a rice tolerant or resistant to ACCase inhibitors is a rice derived from ATCC Accession No. PTA-12933, PTA-13620, PTA-13619, PTA-121398 or PTA-121362 as disclosed in WO 2013/016210. For example a rice is resistant to ACCase inhibitors, for example having a G2096S mutation. Alternatively, the rice crop can be one wherein resistant to HPPD and ACCase inhibitors, for example one derived from PTA-121398 or PTA-121362 as disclosed in WO 2015/025031. Alternatively, the rice crop can be one wherein resistant to ACCase inhibitors, for example one derived from PTA-122646 or PTA-124233 as disclosed in WO 2018/024906, that is, a rice crop tolerant/resistant to ACCase inhibitors, at levels higher than those tolerated by plants without genetic regions from the genomes of rice lines RTA2 and RTA1 that confer tolerance/resistance, or their equivalent as disclosed in WO 2018/024906. Alternatively, the rice crop can be one wherein resistant to ALS inhibitors, for example one derived from PTA-123859, PTA-123860 or PTA-123861as disclosed in WO 2018/144180, that is, a rice crop tolerant/resistant to ALS inhibitors combined amino acid substitutions A205V and G654E in the ALS enzyme.

Other Examples of rice crops that can be used in the method of the invention are rice crops derived from rice derived from ATCC Accession No. PTA-4773 (as disclosed in US6953881), PTA-6795 (as disclosed in US6956154), PTA-8505 (as disclosed in US7351892), PTA-8613 (as disclosed in US7351891), PTA-8800 (as disclosed in US7485784), PTA-8184 (as disclosed in US7304223), PTA-8504 (as disclosed in US7351893), PTA-8185 (as disclosed in US7301083), PTA-10115 (as disclosed in US7642435), PTA-10834 (as disclosed in US8153870), PTA-12289 (as disclosed in US8283536), PTA-12290 (as disclosed in US8283537), PTA-12288 (as disclosed in US8283535), PTA-13291 (as disclosed in US8937234), PTA-13290 (as disclosed in US8921673), PTA-13292 (as disclosed in US8927833), PTA-121457 (as disclosed in US9686932), PTA-121458 (as disclosed in US9693519), PTA-121601 (as disclosed in US9370153), PTA-121603 (as disclosed in US9370154 ), PTA-121604 (as disclosed in US9474226), PTA-121602 (as disclosed in US9408360), PTA-124255 (as disclosed in US2019059312), PTA-124254 (as disclosed in US10561088), PTA-125518 (as disclosed in US10674689), PTA-125519 (as disclosed in US10689665), or PTA-126976 (as disclosed in US11678625).

The weeds that can be treated with the mixture of the invention are those known for rice crops, for example, grass weeds, broadleaf weeds or sedges weeds. Grass weeds may include one or more of *Echinochloa crus-galli, Echinocloa colonum, Echinochloa oryzicola, Digitaria sanguinalis, Leptochloa chilensis, Oryza rufipogon,* or *Oryza sativa.* Broadleaf weeds may include one or more of *Alternenthra spp., Ammonia bacifera, Ammannia coccinea, Bergia ammannioides, Bergia capensis, Bidens cernuain, Bidens frondosa, Eclipta alba, Heteranthera reniformis, Lindernia crustaceae, Ludwigia octovalvis, Ludvigia parviflora, Ludwigia perennis, Ludvigia spp., Marshillia quadrifolia,* Monochoria vaginalis, *Murdannia keisak, Persicaria lapathifolia, Persicaria maculosa,* or *Spenoclea zwylanica.* Sedges may include one or more of *Cyperus difformis, Cyperus iria, Cyperus esculentus, Fimbristylis miliacea, Scripus juncoidus.* For example, the weeds are one or more selected from the group consisting of *Oryza sativa* (ORYSW), *Oryza rufipogon* (ORYRU), *Ammannia coccin* (AMMCO), *Heteranthera reniformis* (HETRE), *Bidens cernuain* (BIDCE), *Murdannia keisak* (ANEKE), *Cyperus difformis* (CYPDI), *Alisma plantago-aquatica* (ALSPA), *and Bidens pilosa* (BIDPI).

The ratio of application of active ingredients of the invention varies depending upon various conditions such as the weather conditions, the type of rice crop, the desired effect, and the type of weeds. For example, the application rates of the chloroacetamide (preferably, dimethenamid) can be from 1 g/ha to 2000 g/ha, for example from 50 g/ha to 1200 g/ha or from 100 g/ha to 1000 g/ha. The application rates of the second active ingredient depend on the particular active ingredient. For example, in the case of thiencarbazone the application rates can be from 1 g/ha to 2000 g/ha, for example from 5 g/ha to 100 g/ha or from 8 g/ha to 50 g/ha.

The following representative examples illustrate the practice of the present invention in some of its embodiments but should not be construed as limiting the scope of the invention. Other embodiments will be apparent to one skilled in the art from consideration of the specification and examples.

### Other Ingredients in a formulation

If the two or more components are added simultaneously as part of a formulation or a tank mixture thereof, said formulation can comprise additional agriculturally acceptable additives, such as solvents, solid carriers, surfactants (including dispersants, wetting agents and emulsifiers), thickeners, drift retarding agents, anti-foaming, biocides (or antimicrobial agents), anti-freeze agents, colorants, pH modifiers, buffers, or fertilizers.

Examples of suitable solvents (also referred to as liquid carriers) potentially useful in the present compositions include but are not limited to water; aromatic hydrocarbons such as alkylbenzenes (e.g. toluene or xylene), tetrahydronaphthalene, alkylnaphthalenes exemplified by the Solvesso^{®} or Caromax^{®} series; alcohols such as alkyl alcohols (e.g. C₁-C₁₂ alkyl alcohols), aromatic alcohols (e.g. C₄-C₂₀ aromatic alcohols, such as benzyl alcohol or furfuryl alcohols) or polyalcohols. Examples of alkyl alcohols are methanol, ethanol, propanol cyclohexanol, amyl alcohol or decanol. Examples of polyalcohols are ethylene glycol, polypropylene glycol, buthylene glycol, diethylene glycol ethyl ether or dipropropylene glycol. Examples of aromatic hydrocarbons are aromatic solvents, such as the Solvesso^{®} or Caromax^{®} series, including low naphthalene aromatic solvents. Other solvents that can be suitable are amines (e.g. dialkylamines of fatty acids); amides such as N,N-dimethylformamide, dimethylacetamide, N,N-dimethyl 9-decenamide, N,N,-dimethyl decanamide or N,N-dimethyloctanamide; N-alkylpyrrolidones such as N-methyl-2-pyrrolidone; N,N-dimethyl lactamide (e.g. Agnique^{®} AMD 3 L), N-octyl-pyrrolidone; dimethylsulfoxide; paraffins (for example, mineral oil fractions such as kerosene or diesel oil); coal tar oils; or vegetable oils such as olive, castor, linseed, tung, sesame, corn, peanut, cotton-seed, soybean, rape-seed, tall or coconut oil. The vegetable oils can be used as extracted or can be treated to provide esters or epoxidized derivatives. For example, the solvent can be the alkyl ester (e.g. C₁-C₄ alkyl ester, for example the methyl ester) of olive, castor, linseed, tung, sesame, corn, peanut, cotton-seed, soybean, rape-seed, tall or coconut oil. Further solvents can be fatty acid esters (e.g. 2-ethyl hexyl stearate, n-butyl oleate, isopropyl myristate, propylene glycol dioleate,); ketones such as acetophenone, cyclohexanone, 2-heptanone, isophorone, or 4-hydroxy-4-methyl-2-pentanone, methyl isobutyl keton; gamma-butyrolactone; propylene carbonate; or mixtures thereof. The formulation may comprise more than one solvent, for example two, three or four solvents.

Exemplary solid carriers include, but are not limited to: solid fertilizers, silicas, silica gels, silicates, talc, kaolin, limestone, lime, chalk, bole, loess, clay, dolomite, diatomaceous earth, calcium sulfate, magnesium sulfate, magnesium oxide, ground synthetic materials, pyrophyllite clay, attapulgus clay, kieselguhr, calcium carbonate, bentonite clay, Fuller's earth, cottonseed hulls, wheat flour, soybean flour, pumice, wood flour, walnut shell flour, lignin, ammonium sulfate, ammonium phosphate, ammonium nitrate, ureas, cereal meal, tree bark meal, wood meal and nutshell meal, cellulose powders, and mixtures thereof.

Examples of suitable surfactants and dispersants include, but are not limited to, non-ionic, anionic, cationic, and amphoteric/Zwitterionic surfactants. Anionic surfactants contain a lipophilic group and an anionic functional group, for example a sulfate, sulfonate, phosphate, or carboxylate. The present formulation may contain one or more anionic surfactants, for example, one selected from the group consisting of alkyl sulfates (e.g. ammonium lauryl sulfate, sodium lauryl sulfate or SLS, also known as sodium dodecyl sulfate or SDS), haloalkyl sulfates (e.g. perfluorooctanesulfonate or perfluorobutanesulfonate), alkyl-ether sulfates (e.g. sodium laureth sulfate also known as sodium lauryl ether sulfate or SLES, or sodium myreth sulfate), lignin sulfonates, condensates of sulfonated naphthalene and naphthalene derivatives with formaldehyde, condensates of naphthalene or of naphthalenesulfonic acid with phenol and formaldehyde, alkylarylsulfonates such as alkylbenzene sulfonates, haloalkyl sulfonates a sulfosuccinate (e.g. dioctyl sodium sulfosuccinate), alkyl-aryl ether phosphate, alkyl ether phosphate, mono or di- phosphate esters (e.g. phosphate esters of alcohol alkoxylates, phosphate esters of alkylphenol alkoxylates or phosphate esters of styrylphenol ethoxylates), carboxylate salts such as alkali metal salts or alkaline earth metal salts or ammonium salts (e.g. sodium stearate), perfluoro carboxylate salts (perfluorononanoate or perfluorooctanoate).

Cationic surfactants contain a lipophilic group and a cationic functional group, for example amines, such as primary, secondary, tertiary or quaternary amines. Examples of the later are cetrimonium bromide (CTAB), cetylpyridinium chloride (CPC), benzalkonium chloride (BAC), benzethonium chloride (BZT), dimethyldioctadecylammonium chloride, and dioctadecyldimethylammonium bromide (DODAB).

Amphoteric/Zwitterionic surfactants have both cationic and anionic centers attached to the same molecule. The cationic part is typically based on primary, secondary, or tertiary amines or quaternary ammonium cations. The anionic portion can be a sulfate, sulfonate, phosphate, or carboxylate.

Non-ionic surfactants have covalently bonded neutral hydrophilic groups (typically containing oxygen atoms), bonded to hydrophobic structures, wherein the water solubility is typically the result of hydrogen bonding. Examples of non-ionic surfactants are ethoxylates, fatty alcohol ethoxylates (Ethylan^{®} NS-500LQ), alkylphenol ethoxylates (APEs or APEOs) such as ethoxylated alkylphenols (e.g. polyoxyethylene octylphenol ether or ethoxylated isooctyl-, octyl- or nonylphenol) and aryl phenols or tristyrylphenol ethoxylate phosphate esters, fatty acid ethoxylates (including ethoxylates derived from vegetable oils, such as ethoxylated castor oil; Agnique^{®} series), long chain alcohols (e.g. isotridecyl alcohol), ethoxylated amines, ethoxylated fatty acid amides, terminally blocked ethylene oxide/propylene oxide block copolymers (poloxamers), fatty acid esters of polyhydroxy compounds, fatty acid esters of glycerol (e.g. glycerol monostearate or glycerol monolaurate), fatty acid esters of sorbitol (e.g. sorbitan monolaurate, sorbitan monostearate or sorbitan tristearate), ethoxylated polysorbate (e.g. Tween^{®} series), fatty acid esters of sucrose, polyvinyl alcohol-vinyl acetate copolymers, acrylic copolymers and alkyl polyglucosides (e.g. decyl glucoside, lauryl glucoside or octyl glucoside). In many cases the ethoxylated products are marketed with different degrees of ethoxylation. Also, the ethoxylation can be substituted to different degrees with other alkyl groups, thus creating, for example, propoxylated derivitaves or derivatives with a mixture of random or block propoxy and ethoxy groups.

The formulation may comprise one or more thickeners. The specific type of thickener is not particularly relevant and those known in the art can be used. Thickeners are typically watersoluble polymers which exhibit suitable pseudo-plastic properties in an aqueous medium. Suitable thickeners can be compounds which affect the flow behavior of an emulsion or a solid suspension or the like and may assist in its stabilization against sedimentation, creaming or caking. Mention may be made, for example, of commercial thickeners based on polysaccharides, such as methylcellulose, carboxymethylcellulose, hydroxypropyl- cellulose, Xanthan Gum, Rhamsan gum, Diutan gum, synthetic polymers such as acrylic acid polymers, polyvinyl alcohol or polyvinyl pyrrolidones, silica, aluminosilicates or phyllosilicates such as montmorillonites, attapulgites and bentonites, which may be hydrophobized. The concentration of thickeners in the final formulation will generally not exceed 2 wt.%, based on the total weight of the final formulation, and is preferably in the range from 0.01 to 2 wt.%, in particular from 0.02 to 1.5 wt.% and especially from 0.1 to 1 wt.%, based on the total weight of the formulation.

The formulation may comprise drift retarding agents, for example, GARDIAN^{®}, GARDIAN^{®} PLUS, DRL GARD^{®}, and PRO-ONE^{®} XL available from Van Diest Supply Co.; COMPADRE, available from Loveland Products, Inc.; BRONC MAX EDT, BRONC PLUS DRY EDT, EDT CONCENTRATE, and IN-PLACE available from Wilbur-Ellis Company; STRIKE ZONE DF available from Helena Chemical Co.; INTACT and INTACT XTRA available from Precision Laboratories, LLC; and AGRHO DR 2000 and AGRHO DEP 775 available from the Solvay Group. Suitable drift retarding agents also include, for example, guar-based (e.g. containing guar gum or derivatized guar gum) drift retarding agents. Non-cellulosic polysaccharide, e.g. guar-based, derivatives, such as cationic guar gum, are for example known from WO 2013/011122, WO 03/095497 or US 2001/0051140.

Exemplary antifoam agents include, but are not limited to, silicone emulsions, long-chain alcohols, fatty.

Exemplary antimicrobial agents include, but are not limited to, bactericides based on dichlorophen and benzyl alcohol hemiformal; isothiazolinone derivatives, such as alkylisothiazolinones and benzisothiazolinones; and mixtures thereof.

Exemplary antifreeze agents, include, but are not limited to ethylene glycol, propylene glycol, urea, glycerol, and mixtures thereof.

Exemplary colorants include, but are not limited to, the dyes known under the names Rhodamine B, pigment blue 15:4, pigment blue 15:3, pigment blue 15:2, pigment blue 15:1, pigment blue 80, pigment yellow 1, pigment yellow 13, pigment red 1 12, pigment red 48:2, pigment red 48:1, pigment red 57:1, pigment red 53:1, pigment orange 43, pigment orange 34, pigment orange 5, pigment green 36, pigment green 7, pigment white 6, pigment brown 25, basic violet 10, basic violet 49, acid red 51, acid red 52, acid red 14, acid blue 9, acid yellow 23, basic red 10, basic red 108, and mixtures thereof.

The formulation can be an emulsion concentrate, oil dispersion (or oi suspension), a suspension, a paste, wettable powders, water in oil emulsions, oil in water emulsions, solid suspensions, suspo-emulsion or water-dispersible granules. To prepare emulsions, pastes or oil dispersions, the components of the compositions either as such or dissolved in an oil or solvent, can be homogenized in water by means of a wetting agent, tackifier, dispersant or emulsifier. Alternatively, it is also possible to prepare concentrates comprising active ingredient, wetting agent, tackifier, dispersant or emulsifier and, if desired, a solvent or oil, which are suitable for dilution with water.

If a formulation is used combining the chloroacetamide, preferably, dimethenamid-P, and a second active ingredient, for example, thiencarbazone-methyl, it is preferable an oil dispersion using as solvent a vegetable oil, such as olive, castor, linseed, tung, sesame, corn, peanut, cotton-seed, soybean, rape-seed, tall or coconut oil.

### REPRESENTATIVE EXAMPLES

### Example 1: dry-seeding treatment (comparative)

Different combinations of active ingredients were tested under dry conditions an Imidazolinone resistant rice using the amounts indicated in Table 1, wherein TCM means thiencarbazone-methyl, DMTP means dimethenamid-P and CPS means cyprosulfamide.

Standard dry seeding conditions were used. The seeds were sown on dry soil, and then flooded after germination. All treatments were added prior to planting the seeds (pre-sowing).

Treatment # 1 is the control.

**Table 1**

| # | Formulation | Rate | TCM | DMTP | CPS |
|---|---|---|---|---|---|
| | | l/ha | g a.i/ hectare | | |
| 1 | UTC | 0 | | | |
| 2 | Dimethenamid-P EC | 0.5 | | 360 | |
| 3 | Dimethenamid-P EC | 0.7 | | 504 | |
| 4 | Dimethenamid-P EC | 1 | | 720 | |
| 5 | Dimethenamid-P EC | 1.4 | | 1008 | |
| 6 | Dimethenamid-P + thiencarbazone-methyl + cyprosulfamide OD | 0.75 | 11.25 | 187.5 | 16.87 |
| 7 | Dimethenamid-P + thiencarbazone-methyl + cyprosulfamide.5 g/L OD | 1 | 15 | 250 | 22.5 |
| 8 | Dimethenamid-P + thiencarbazone-methyl + cyprosulfamide OD | 2 | 30 | 500 | 45 |

The readings for phytotoxicity and efficacy were conducted at 19, 33 and 47 days after sowing. All readings exhibit a consistent trend.

The results as phytotoxicity percentage with respect to the control are displayed in Table 2 below.

**Table 2**

| Treatment | 19 | 33 | 47 |
|---|---|---|---|
| 1 | 0 | 0 | 0 |
| 2 | 77.5 | 26.3 | 18.8 |
| 3 | 88.8 | 52.5 | 42.5 |
| 4 | 97.5 | 90 | 78.8 |
| 5 | 98.8 | 92.5 | 88.8 |
| 6 | 30 | 6.3 | 5 |
| 7 | 70 | 25 | 15 |
| 8 | 88.8 | 60 | 57.5 |

All treatments # 2 to 8 were discouraging, displaying high phytotoxic (with a few exceptions), proving the unsuitability of dry conditions.

### Example 2: wet-seeding

Different combinations were tested on the weed *Oryza sativa* (ORYSW) in the presence of an Imidazolinone resistant rice using the amounts indicated in Table 3, wherein TCM means thiencarbazone-methyl, DMTP means dimethenamid-P and CPS means cyprosulfamide.

Comparative treatments # C9 and C10 represent the commonly employed standards for the treatment of rice in Italian rice fields under wet conditions. The herbicide application method followed the label instructions, with plots being flooded during application. Water was retained in the plots for 30 days before removal, followed by reflooding with fresh water the day before sowing, in accordance with the label instructions.

Treatment # 1 is the control. No herbicide was applied in the field but followed the same sequence of flooding and re-flooding.

Treatments # 2 to 8 were applied two days before flooding the plots. Water was retained in the plots for 20 days, followed by renewing the water in the plots the day before sowing. Then, the flooded field was sown.

**Table 3**

| # | Formulation | Flufenacet | TCM | DMTP | CPS |
|---|---|---|---|---|---|
| | | g a.i/ hectare | | | |
| 1 | UTC | | | | |
| 2 | Dimethenamid-P EC | | | 360 | |
| 3 | Dimethenamid-P EC | | | 504 | |
| 4 | Dimethenamid-P EC | | | 720 | |
| 5 | Dimethenamid-P EC | | | 1008 | |
| 6 | Dimethenamid-P + thiencarbazone-methyl + cyprosulfamide OD | | 11.25 | 187.5 | 16.87 |
| 7 | Dimethenamid-P thiencarbazone-methyl + cyprosulfamide OD | | 15 | 250 | 22.5 |
| 8 | Dimethenamid-P + thiencarbazone-methyl + cyprosulfamide OD | | 30 | 500 | 45 |
| C9 | Flufenacet WG | 490 | | | |
| C10 | Flufenacet WG | 980 | | | |

The readings for phytotoxicity and efficacy were conducted at 8, 17 days after sowing. All readings exhibit a consistent trend. As an illustrative example, we will present the data from 17 days after sowing, which corresponds to 42 days after the application of Treatments # 2 to 8, and 50 days after the application of Comparative Treatments # C9 and C10.

The results are displayed in Table 4 below.

**Table 4**

| Treatment | Phytotoxicity | ORYSW % |
|---|---|---|
| 1 (55 pl/m²) | 0 | 0 |
| 2 | 0 | 67.5 |
| 3 | 0 | 68.8 |
| 4 | 0 | 80 |
| 5 | 0 | 77.5 |
| 6 | 0 | 85.5 |
| 7 | 0 | 87.5 |
| 8 | 0 | 96 |
| C9 | 0 | 33.8 |
| C10 | 0 | 52.5 |

Treatment # 1 (control) yielded 0 phytotoxicity and 0 efficacy. None of the Treatments # 2 to 8 nor C9 or C10 exhibited phytotoxicity. However, Treatments # 2 to 8 provided a surprisingly higher control than Treatments # C9 and C10 without an increase in phytotoxicity, and were therefore significantly superior.

### Example 3: wet-seeding

Different combinations were tested on the weeds *Oryza rufipogon* (ORYRU), *Ammannia coccin* (AMMCO), *Heteranthera reniformis* (HETRE), and *Bidens cernuain* (BIDCE) in the presence of an Imidazolinone resistant rice under wet conditions using the amounts indicated in Table 5, wherein TCM means thiencarbazone-methyl, DMTP means dimethenamid-P and CPS means cyprosulfamide.

Comparative treatments # C9 and C10 represent the commonly employed standards for the treatment of rice under wet conditions in Italian rice fields. The herbicide application method followed the label instructions, with plots being flooded during application. Water was retained in the plots for 30 days before removal, followed by reflooding with fresh water the day before sowing, in accordance with the label instructions.

Treatment # 1 is the control. No herbicide was applied in the field, but followed the same sequence of flooding and re-flooding.

Treatments # 2 to 8 were applied by flooding the plots two days after application of the corresponding treatment. Water was retained in the plots for 20 days, followed by renewing the water in the plots the day before sowing.

**Table 5**

| # | Formulation | Flufenacet | TCM | DMTP | CPS |
|---|---|---|---|---|---|
| | | g a.i/ hectare | | | |
| 1 | UTC | | | | |
| 2 | Dimethenamid-P EC | | | 360 | |
| 3 | Dimethenamid-P EC | | | 504 | |
| 4 | Dimethenamid-P EC | | | 720 | |
| 5 | Dimethenamid-P EC | | | 1008 | |
| 6 | Dimethenamid-P thiencarbazone-methyl + cyprosulfamide OD | | 11.25 | 187.5 | 16.87 |
| 7 | Dimethenamid-P thiencarbazone-methyl + cyprosulfamide OD | | 15 | 250 | 22.5 |
| 8 | Dimethenamid-P thiencarbazone-methyl + cyprosulfamide OD | | 30 | 500 | 45 |
| C9 | Flufenacet WG | 490 | | | |
| C10 | Flufenacet WG | 980 | | | |

The readings for phytotoxicity and efficacy were conducted at 8, 19, 31, 44 days after sowing. All readings exhibit a consistent trend. As an illustrative example, we will present the data from 31 days after sowing, which corresponds to 53 days after the application of Treatments # 2 to 8, and 63 days after the application of Comparative Treatments # C9 and C10.

The results are displayed in Table 6 below.

**Table 6**

| Treatment # | Phytotoxicity | ORYRU | HETRE | AMMCO | BIDCE |
|---|---|---|---|---|---|
| 1 | 0 | 0 | 0 | 0 | 0 |
| 2 | 0 | 67.5 | 32.5 | 100 | 67.5 |
| 3 | 0 | 74.5 | 43.8 | 100 | 88.8 |
| 4 | 0 | 83 | 62.5 | 100 | 97 |
| 5 | 0 | 93.8 | 70.5 | 100 | 95.8 |
| 6 | 0 | 87 | 87.8 | 93.8 | 100 |
| 7 | 0 | 92.3 | 88.8 | 99.5 | 100 |
| 8 | 0 | 94.5 | 95.8 | 100 | 100 |
| C9 | 0 | 35 | 40 | 35 | 40 |
| C10 | 0 | 40 | 66.3 | 53.8 | 42.5 |

Treatment # 1 (control) yielded 0 phytotoxicity and 0 efficacy. None of the Treatments # 2 to 8 nor C9 or C10 exhibited phytotoxicity. However, Treatments # 2 to 8 provided a surprisingly higher control than Treatments # C9 and C10 without an increase in phytotoxicity, and were therefore significantly superior.

### Example 4: wet-seeding

Different combinations were tested on the weeds *Murdannia keisak* (ANEKE), *Cyperus difformis* (CYPDI), *Alisma plantago-aquatica* (ALSPA), *Heteranthera reniformis* (HETRE), *Bidens 21ilosa* (BIDPI) in the presence of rice (Selenio variety; conventional rice) using the amounts indicated in Table 7, wherein TCM means thiencarbazone-methyl, DMTP means dimethenamid-P and CPS means cyprosulfamide.

Treatment # 1 is the control. No herbicide was applied in the field, but followed the same sequence of flooding and re-flooding.

Treatments # 2 to 8 were applied by flooding the plots two days after application of the corresponding treatment. Water was retained in the plots for 20 days, followed by renewing the water in the plots the day before sowing.

**Table 7**

| # | Formulation | TCM g ai/ha | DMTP g ai/ha | CPS g ai/ha |
|---|---|---|---|---|
| 1 | UTC | | | |
| 2 | Dimethenamid-P EC | | 360 | |
| 3 | Dimethenamid-P EC | | 504 | |
| 4 | Dimethenamid-P EC | | 720 | |
| 5 | Dimethenamid-P EC | | 1008 | |
| 6 | Dimethenamid-P + thiencarbazone-methyl + cyprosulfamide | 11.25 | 187.5 | 16.87 |
| 7 | Dimethenamid-P + thiencarbazone-methyl + cyprosulfamide OD | 15 | 250 | 22.5 |
| 8 | Dimethenamid-P + thiencarbazone-methyl + cyprosulfamide OD | 30 | 500 | 45 |

The readings for phytotoxicity and efficacy were conducted at 5, 19, 35 days after sowing. All readings exhibit a consistent trend. As an illustrative example, we will present the data from 19 days after sowing, which corresponds to 40 days after the application of Treatments # 2 to 8.

The results are displayed in Table 8 below.

**Table 8**

| Treatment | Phytotoxicity | ANEKE | ALSPA | HETRE | BIDPI |
|---|---|---|---|---|---|
| 1 | 0 | 0 | 0 | 0 | 0 |
| 2 | 0 | 50 | 61.7 | 70 | 61.7 |
| 3 | 0 | 53.3 | 78.3 | 75 | 70 |
| 4 | 0 | 55 | 81.7 | 83.3 | 86.7 |
| 5 | 0 | 60 | 90 | 90 | 91.7 |
| 6 | 0 | 58 | 50 | 71.7 | 91.7 |
| 7 | 0 | 68.3 | 70 | 85 | 90 |
| 8 | 0 | 81.7 | 71.7 | 86.7 | 90 |

Treatment # 1 (control) yielded 0 phytotoxicity and 0 efficacy. None of the Treatments # 2 to 8 exhibited phytotoxicity.

## Claims

1. A method for controlling weeds in the presence of a rice crop comprising wet-seeding rice seeds and contacting the weeds or their *locus* with an agriculturally effective amount of a chloroacetamide (e.g. dimethenamid), salts or stereoisomers thereof.

2. The method wherein the chloroacetamide is dimethenamid-P.

3. The method for controlling weeds in the presence of a rice crop comprising contacting the weeds or their *locus* with an agriculturally effective amount of the chloroacetamide, salts or stereoisomers thereof, and a second active ingredient.

4. The method wherein said second active ingredient is an ALS inhibitor.

5. The method wherein said second active ingredient is thiencarbazone, salts, esters or stereoisomers thereof.

6. The method comprising adding a safener.

7. The method wherein the chloroacetamide, the second active ingredient and the safener are added simultaneously as a formulation or tank mixture thereof.

8. The method wherein the chloroacetamide, the second active ingredient and the safener are added sequentially.

9. The method wherein the rice crop is a conventional rice crop.

10. The method wherein the rice crop is a resistant rice crop or a tolerant rice crop.

11. The method wherein the rice crop is resistant or tolerant to an ALS inhibiting herbicide, an ACCase inhibiting herbicide or to both.

12. The method wherein the rice crop is resistant or tolerant to imidazolinones, to aryloxphenoxy-propionates or to both.

13. The method wherein the chloroacetamide is added before germination of the rice crop, preferably before wet-seeding the rice seeds.

14. A tank mixture comprising a chloroacetamide for use in the control of weeds in the presence of a rice crop that has been wet-seeded.

15. The use of a chloroacetamide for controlling weeds in the presence of a rice crop that has been wet-seeded.
